# EUROPÄISCHE PATENTSCHRIFT

(11) **EP 0 964 186 B1**
(45) Veröffentlichungstag und Bekanntmachung des Hinweises auf die Patenterteilung: **23.07.2003**
(21) Anmeldenummer: 99110924.0
(22) Anmeldetag: 04.06.1999
(51) Int. Cl.: F16H 25/22

(54) **Kugelrollspindel**
Ball screw device
Vis à billes

(30) Priorität: 09.06.1998 DE 19825769
(43) Veröffentlichungstag der Anmeldung: 15.12.1999
(73) Patentinhaber: Miller, Franz Georg, D-71229 Leonberg (DE)
(72) Erfinder: Miller, Franz Georg, D-71229 Leonberg (DE)
(74) Vertreter: Held, Thomas, Dr.

(56) Entgegenhaltungen:
- EP-A- 0 337 418
- DE-A- 4 401 198
- US-A- 5 241 874
- PATENT ABSTRACTS OF JAPAN vol. 007, no. 177 (M-233), 5. August 1983 (1983-08-05) -& JP 58 081259 A (SADAHITO NAKAGAWA), 16. Mai 1983 (1983-05-16)

## Beschreibung

Die Erfindung betrifft eine Vorrichtung zur Umwandlung einer Drehbewegung in eine hin- und hergehende Bewegung, welche auch als Kugelrollspindel bezeichnet wird, gemäß Oberbegriff von Anspruch 1.

In der DE 4401 198, welche die Merkmale des Oberbegriffs von Anspruch 1 offenbart, ist eine Vorrichtung zur Umwandlung einer Drehbewegung in eine hin- und hergehende Hubbewegung bzw. umgekehrt beschrieben. Die bekannte Vorrichtung weist eine Spindel mit wenigstens einer Führungsnut in der äußeren Mantelfläche, einen Lagerkörper und eine Kraftübertragungseinrichtung mit einem Kugelmechanismus auf. Die Spindel und der Lagerkörper sind sowohl drehbar als auch axial relativ zueinander verschiebbar angeordnet. Der Kugelmechanismus ist in einer durchgehenden Bohrung im Lagerkörper so gelagert, daß er auf einer Seite in die Führungsnut ragt, auf einer entgegengesetzten Seite dazu dagegen nach außen über den Wandabschnitt des Lagerkörpers vorsteht. Auf den Lagerkörper ist ein Laufring aufgezogen, welcher am Kugelmechanismus abgestützt ist und diesen in Richtung der Führungsnut vorspannt. Um zu verhindern, daß der Laufring in axialer Richtung aus dem Bereich des Kugelmechanismus herausgeschoben wird und somit die Mitnehmerkugeln des Kugelmechanismus freigibt, ist bei dem bekannten Mechanismus für jeden Kugelmechanismus der Vielzahl von Kugelmechanismen entweder eine im Querschnitt V-förmige Nut in der inneren Mantelfläche des Laufringes vorgesehen, oder die Vorrichtung ist nur für kleinere Hübe vorgesehen.

Des weiteren ist in EP 0 337 418 A1 eine Vorrichtung zur Steuerung von Ventilen, Robotern oder Werkzeugmaschinen beschrieben. Bei dieser bekannten Vorrichtung ist ein Kugelmechanismus einerseits in einer Führungsnut einer Spindel und andererseits in einer axialen Nut eines die Spindel und den Lagerkörper umschließenden Gehäuses abgestützt. In dem Gehäuse ist die Spindel gleichzeitig drehbar gelagert. Die bekannte Vorrichtung ist zwar vielfältig für Relativbewegungen zwischen der Spindel, dem Lagerkörper und dem Gehäuse bzw. bei aus diesen Bauelementen hergestellten Geräten, wie z.B. Dosierpumpen einsetzbar. Allerdings sind diese Vorrichtungen vergleichsweise kompliziert aufgebaut und erfordern demzufolge relativ hohe Herstellungskosten.

Schließlich ist in der DE 43 34 477 A1 eine Vorrichtung zur Umwandlung einer Drehbewegung in eine Transversalbewegung offenbart, wobei in den Gewindegängen Kugeln vorgesehen sind, die in Umfangsrichtung durch einen Lagerkörper gehalten werden. Zur Lagerung der Spindel sind die Kugeln in radialer Richtung einschichtig oder zweischichtig vorgesehen, wobei die radial äußerste Kugel stets in einem Laufring Aufnahme und Lagerung findet. Jede Kugel in diesem Laufring wird zumindest durch zwei Schultern gelagert, die beispielsweise als Laufrillen mit V-förmigem Querschnitt ausgebildet sind. Eine solche Führung der Kugeln ist technisch aufwendig und zum anderen verschleißerhöhend, weil die Kugeln eine relativ große Berührungsfläche mit dem Laufring haben.

Demgegenüber besteht die Aufgabe der vorliegenden Erfindung darin, eine Vorrichtung zur Umwandlung einer Drehbewegung in eine hin- und hergehende Bewegung zu schaffen, welche eine axiale Verschiebung des Laufringes relativ zum Kugelmechanismus zuverlässig verhindert und welche einfach aufgebaut ist und daher niedrigere Herstellungskosten als bekannte Systeme erfordert.

Diese Aufgabe wird mit einer Vorrichtung mit den Merkmalen gemäß Anspruch 1 gelöst. Zweckmäßige Weiterbildungen sind in den abhängigen Ansprüchen definiert.

Die Vorrichtung zur Umwandlung einer Drehbewegung in eine hin- und hergehende Bewegung weist eine Spindel mit einer zumindest eine Führungsnut aufweisenden äußeren Mantelfläche, einen Lagerkörper mit einem die Mantelfläche konzentrisch umgebenden Wandabschnitt und eine Kraftübertragungseinrichtung mit zumindest einem zumindest eine Mitnehmerkugel umfassenden Kugelmechanismus auf. Die Spindel und der Lagerkörper sind drehbar und axial relativ zueinander verschiebbar angeordnet. Der Kugelmechanismus ist in einer Lagerbohrung in dem Wandabschnitt gelagert und ragt sowohl in die Führungsnut hinein als auch nach außen über den Außenumfang des Wandabschnittes heraus. Auf dem Lagerkörper ist ein Laufring aufgezogen, welcher zumindest einen Kugelmechanismus in Richtung der Führungsnut vorspannt. Erfindungsgemäß weist der Laufring zumindest eine im wesentlichen konzentrisch zu dem Wandabschnitt angeordnete Mitnehmerkugel-Lauffläche und eine Arretiervorrichtung auf. Mittels der Arretiervorrichtung ist der Laufring bezüglich seiner axialen Bewegung relativ zu dem Kugelmechanismus lagefixiert.

Die konzentrisch zu dem Wandabschnitt des Lagerkörpers angeordnete Mitnehmerkugel-Lauffläche kann mit geringem technologischen Aufwand und somit kostengünstig hergestellt werden. Um ein axiales Verschieben eines derartigen Laufringes mit seiner technologisch einfach herstellbaren zylindrischen Innenmantelfläche aus dem Abrollbereich des Kugelmechanismus zu verhindern, weist der Laufring eine diese axiale Relativbewegung zwischen dem Laufring und dem Lagerkörper verhindernde Arretiervorrichtung auf. Dadurch ist gewährleistet, daß die Mitnehmerkugeln des Kugelmechanismus unter keinen Umständen durch die den Kugelmechanismus abstützende zylindrische Innenmantelfläche freigegeben werden und aus den Lagerbohrungen des Lagerkörpers herausfallen bzw. herausgetrieben werden können.

Die in der Lagerbohrung geführten bzw. aufgenommenen Mitnehmerkugeln sind dabei so angeordnet, daß eine Mitnehmerkugel in einer Führungsnut der Spindel und in der Lagerbohrung und die darüberliegende Mitnehmerkugel an der zylindrischen Innenmantelfläche und in der Lagerbohrung geführt sind. Es ist jedoch auch möglich, anstelle der Doppelkugelanordnung eine einzige Mitnehmerkugel vorzusehen, welche in der Führungsnut der Spindel, der Lagerbohrung des Lagerkörpers und an der zylindrischen Innenmantelfläche des Laufringes abstützend geführt ist. In einem solchen Fall ist zwar die Lagerbohrung im Lagerkörper mit entsprechend größerem Durchmesser auszuführen, der Vorteil besteht jedoch darin, daß für den Kugelmechanismus lediglich eine einzelne Mitnehmerkugel ausreichend ist.

Die Arretiervorrichtung des Laufringes weist zumindest im Bereich von dessen Stirnseiten jeweils einen Ringansatz auf. Der Ringansatz hat einen Durchmesser, welcher kleiner als der Durchmesser der Mitnehmerkugel-Lauffläche ist, so daß am Ringansatz in dessen Stirnbereich eine Innenschulter gebildet ist, an welcher die der jeweiligen Schulter zugewandte Mitnehmerkugel anliegt. Dadurch wird eine axiale Verschiebung des Laufringes gegenüber dem Kugelmechanismus verhindert. Da vor allem bei Laufringen mit relativ großer axialer Länge vorzugsweise mehrere Kugelmechanismen vorzusehen sind, d.h. der Lagerkörper mehrere Lagerbohrungen zur Aufnahme derartiger Kugelmechanismen aufweist, ist es bei Vorhandensein der jeweiligen Schultern im Stirnseitenbereich der Arretiervorrichtung nicht erforderlich, daß die zwischen den äußeren, an den Innenschultern geführten Mitnehmerkugeln der Kugelmechanismen eine zusätzliche seitliche Führung aufweisen. Vielmehr ist es ausreichend, daß die zwischen den in Längsrichtung äußeren Kugelmechanismen liegenden Kugelmechanismen sich lediglich an der zylindrischen Innenmantelfläche des Laufringes abstützen. Es ist jedoch auch möglich, daß die konzentrisch zu dem Wandabschnitt des Lagerkörpers angeordnete Mitnehmerkugel-Lauffläche flach ausgebildete kleine rillenartige Kugellaufflächen aufweist, so daß für vorzugsweise jeden Kugelmechanismus, welcher zwischen den an den Innenschultern anliegenden Kugellaufflächen liegt, jeweils eine zumindest geringe Führung zur Verhinderung der axialen Relativbewegung des Laufringes gegenüber den Kugelmechanismen gegeben ist.

Gemäß einem weiteren bevorzugten Ausführungsbeispiel ist die Arretiervorrichtung des Laufringes als schräge Fläche ausgebildet, deren Richtung geneigt zur Längsachse der Spindel ist. Die die eigentliche Innenschulter bildende schräge Fläche stellt eine Kegelabschnittsfläche dar, so daß die diese Innenschulter berührenden am weitesten außen liegenden Mitnehmerkugeln der Kugelmechanismen eine zumindest theoretisch punktweise Berührung aufweisen, welche reibungstechnisch besonders günstig ist.

Es ist jedoch gemäß einer weiteren Ausbildung auch möglich, daß die Innenschulter im wesentlichen formkongruent zu der Oberfläche der Mitnehmerkugel ist. Das heißt die Fläche der Innenschulter ist so ausgebildet, daß sie sich an die Oberfläche der Mitnehmerkugel des jeweiligen Kugelmechanismus anlegt, wodurch eine besonders gute Führung für die Mitnehmerkugeln gegeben ist.

Vorzugsweise ist zumindest einer der beiden Ringansätze integral mit dem Laufring verbunden. Es ist jedoch auch möglich, daß beide Ringansätze integral mit dem Laufring verbunden sind. Im letzteren Fall erfolgt die Montage von Spindel, Kugelmechanismus, Lagerkörper und Laufring derart, daß zunächst der Laufring über den Lagerkörper in den Bereich der Lagerbohrungen geschoben wird, daß entsprechende Mitnehmerkugeln des Kugelmechanismus in die Führungsnut der Spindel eingelegt werden und nach und nach auf diese Weise die Lagerbohrungen im Lagerkörper mit den Mitnehmerkugeln des Kugelmechanismus "gefüllt" werden. Nachdem die Mitnehmerkugeln montiert worden sind, ist eine axiale Relativverschiebung des Laufringes gegenüber dem Lagerkörper nicht mehr möglich, da der Innenabstand der Innenschultern so bemessen ist, daß die jeweils äußeren Kugelmechanismen mit ihren Mitnehmerkugeln gerade an den Innenschultern anliegen.

Gemäß einem weiteren Ausführungsbeispiel ist zumindest einer der beiden Ringansätze als Einsatzstück am Laufring lösbar befestigt. Vorzugsweise besteht dieses Einsatzstück aus verschleißfestem Material. Wenn die Vorrichtung mit zumindest einem lösbar befestigten Ringansatz des Laufringes ausgebildet ist, ist es möglich, die Spindel zunächst in den Lagerkörper einzuführen, anschließend die Mitnehmerkugeln in die Lagerbohrungen des Lagerkörpers einzusetzen und danach den Laufring über den Bereich des Kugelmechanismus zu schieben, woran sich das Befestigen des Ringansatzes an dem Laufring anschließt, so daß dann dessen axiale Relativverschiebung zu dem Lagerkörper verhindert ist.

Gemäß einem weiteren Ausführungsbeispiel ist der Laufring in seiner Längsrichtung geschlitzt als Spannring ausgebildet, welcher mittels eines Spannelementes spannbar ist. Dadurch ist es möglich, den Laufring auf die geforderte Spannung einzustellen. Des weiteren ist es möglich, einen geteilten Laufring vorzusehen, so daß jede einzelne Mitnehmerkugel des Kugelmechanismus einen eigenen Spannring aufweist, welcher gleichermaßen als Spannring ausgebildet ist. Auch ein einzeln für jeden Kugelmechanismus vorgesehener Laufring kann sowohl integral mit den Ringansätzen als auch in geteilter Bauweise ausgebildet sein.

Zum Toleranzausgleich kann die äußere Kugel mit anderem Durchmesser eingesetzt werden, z.B. kleinerer Durchmesser im µ-Bereich, um gewünschte Laufeigenschaften zu erreichen.

Weitere Vorteile, Merkmale und Anwendungsmöglichkeiten der Erfindung werden nun unter Bezugnahme auf die beigefügten Zeichnungen detailliert erläutert. Es zeigen:
- Fig. 1: ein erstes Ausführungsbeispiel einer erfindungsgemäßen Kugelrollspindel mit einteiligem Laufring;
- Fig. 2: ein weiteres Ausführungsbeispiel einer erfindungsgemäßen Kugelrollspindel mit geteiltem Laufring;
- Fig. 3: ein weiteres Ausführungsbeispiel einer erfindungsgemäßen Kugelrollspindel mit geteiltem Laufring und nur einer Mitnehmerkugel als Kugelmechanismus;
- Fig. 4: eine Spindel mit beispielhaft unterschiedlich gestalteten Führungsnuten zur Aufnahme der Mitnehmerkugeln des Kugelmechanismus der erfindungsgemäßen Kugelrollspindel;
- Fig. 5: ein weiteres Ausführungsbeispiel der Erfindung mit in der im wesentlichen konzentrischen zylindrischen Innenmantelfläche des Laufringes eingebrachten leichten Führungsnuten;
- Fig. 6: eine Schnittdarstellung entlang der Linie A-A gemäß Fig. 5; und
- Fig. 7: ein weiteres Ausführungsbeispiel einer erfindungsgemäßen Kugelrollspindel mit geteiltem Laufring.

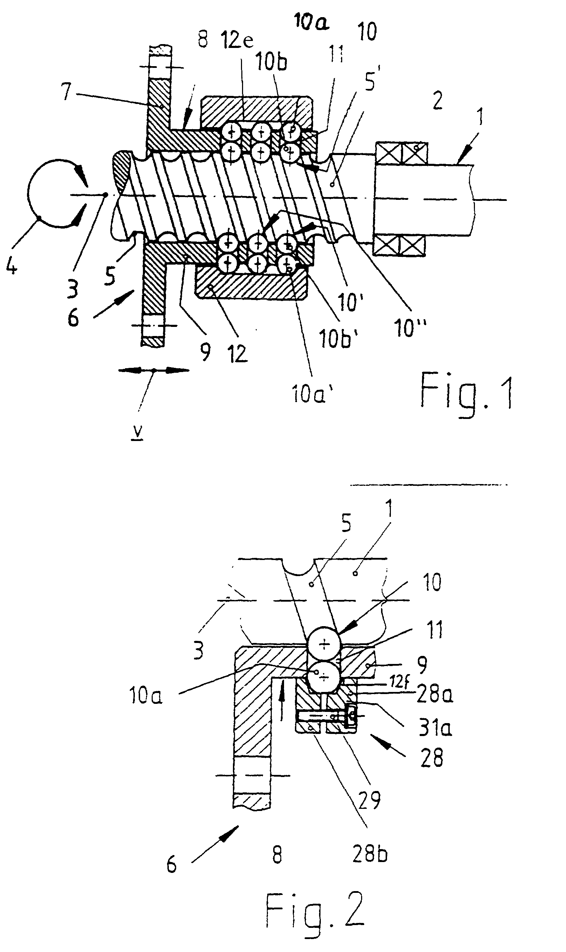

In Fig. 1 ist ein erstes Ausführungsbeispiel einer erfindungsgemäßen Kugelrollspindel dargestellt. Bei dieser erfindungsgemäßen Vorrichtung zur Umwandlung einer Drehbewegung in eine hin- und hergehende Hubbewegung ist eine zentral angeordnete Spindel 1 (Drehteil), welche in einem nicht dargestellten Gestell, wie z.B. einer Werkzeugmaschine mittels beispielsweise als Axiallager ausgebildeten Lagern 2 axial und verschieblich drehbar gelagert ist. Die Spindel 1 ist somit um ihre Drehachse in die mittels des Doppelpfeils 4 angegebenen Richtungen hin- und herdrehbar.

Im Bereich des eigentlichen Mechanismus der Kugelrollspindel weist die Spindel 1 einen Bereich auf, in welchem in ihre äußere Mantelfläche zwei parallele, ihre die Längsachse 3 schraubenlinienförmig umlaufende Führungsnuten 5 und 5' eingearbeitet sind. Die Größe des Bereiches der Spindel 1, in welchem die Führungsnuten 5 und 5' eingearbeitet sind bzw. deren Längen hängen im wesentlichen vom gewünschten Verstellweg der Hubbewegung und den zu übertragenden Kräften und somit von deren Steigungen sowie im wesentlichen vom gewünschten Übersetzungsverhältnis ab.

Die Vorrichtung gemäß Fig. 1 enthält des weiteren ein Hubteil 6, welches zum Anschluß an ein ebenfalls nicht gezeigtes, hin- und herzubewegendes Teil, wie z.B. einen Schlitten einer Werkzeugmaschine dient. Das Hubteil 6 weist einen, mit dem zu bewegenden Teil verbundenen bzw. verbindbaren Flansch 7 und einen Lagerkörper 8 auf, welcher an dem Flansch 7 einstückig oder lösbar befestigt ist und welcher des weiteren eine Hülse mit einem zylindrischen Wandabschnitt 9 aufweist. Der Innendurchmesser des zylindrischen Wandabschnittes 9 entspricht im Bereich der Führungsnuten 5, 5' im wesentlichen dem Außendurchmesser der Spindel 1. Dadurch ist der Lagerkörper 8, ohne daß zusätzliche Lager benötigt werden, zentriert und spielfrei auf der Spindel 1 geführt und relativ zu dieser axial verschiebbar und drehbar gelagert. Relativ zur Werkzeugmaschine oder dergleichen ist der Lagerkörper 8 bei diesem Ausführungsbeispiel aufgrund seiner Befestigung am Schlitten jedoch undrehbar gehalten.

Eine Kraftübertragungseinrichtung enthält außer den Führungsnuten 5, 5' wenigstens je einen Mitnehmermechanismus, der bei diesem Ausführungsbeispiel als Kugelmechanismus 10, 10' ausgebildet ist. Des weiteren weist die Kraftübertragungseinrichtung in einem Teil des Wandabschnittes 9, dessen Dicke kleiner als die Dicke des Kugelmechanismus 10, 10' ausgebildet ist, wenigstens eine, dem Kugelmechanismus 10, 10' zugeordnete durchgehende Lagerbohrung 11 auf. Der Kugelmechanismus 10, 10' ist dabei so in der Lagerbohrung 11 angeordnet, daß er auf einer Seite in die Führungsnuten 5 bzw. 5' ragt und auf der entgegengesetzten Seite dazu über den die Lagerbohrung 11 aufweisenden Wandabschnitt 9 radial vorsteht. Dies wird bei dem beschriebenen Ausführungsbeispiel für den aus zwei Mitnehmerelementen in Form von Mitnehmerkugeln 10a und 10b bestehenden Kugelmechanismus 10 durch axiales Hintereinanderanordnen der beiden Mitnehmerkugeln 10a und 10b in der Lagerbohrung 11 erreicht, wobei die innere Mitnehmerkugel 10b etwa zur Hälfte in die Führungsnut 5 ragt, während die äußere Mitnehmerkugel 10a etwa zur Hälfte aus der Lagerbohrung 11 radial nach außen ragt. Die äußere Mitnehmerkugel 10a stützt sich an einer konzentrisch zu dem Wandabschnitt 9 angeordneten Mitnehmerkugel-Lauffläche 12e eines Laufringes 12 ab.

Die Führungsnuten 5, 5' und die im wesentlichen konzentrisch ausgebildete Mitnehmerkugel-Lauffläche 12e sind so ausgebildet bzw. weisen einen solchen Abstand zueinander auf, daß die Mitnehmerkugeln 10a, 10b an ihren einander zugewandten Seiten in der Lagerbohrung 11 auf Stoß aneinanderliegen. Bei diesem Ausführungsbeispiel weisen die Führungsnuten 5, 5' einen halbkreisförmigen Querschnitt auf, dessen Radius im wesentlichen dem Kugelradius entspricht. Schließlich ist der Durchmesser der Lagerbohrung 11 so gewählt, daß er im wesentlichen dem Durchmesser der Mitnehmerkugeln 10a und 10b entspricht, damit die Mitnehmerkugeln 10a, 10b im wesentlichen spielfrei im Lagerkörper 8 gelagert sind. Entsprechendes gilt für den Kugelmechanismus 10' mit den Mitnehmerkugeln 10a', 10b'.

Der Laufring 12 besteht aus einer zylindrischen, zur Längsachse 3 koaxialen Hülse mit der zylindrisch ausgebildeten und konzentrisch zu dem Wandabschnitt 9 angeordneten Mitnehmerkugel-Lauffläche 12e, an welcher sich die Mitnehmerkugeln abstützen bzw. an welcher diese ablaufen. Der Laufring ist so dimensioniert, daß die Mitnehmerkugeln einerseits an den Führungsnuten 5, 5' und andererseits an der Mitnehmerkugel-Lauffläche 12e abgestützt und zwischen beiden so vorgespannt sind, daß die beiden Mitnehmerkugeln 10a, 10b bzw. 10a', 10b' die Kräfte von der Spindel 1 weitgehend spielfrei auf das Hubteil 6 übertragen. Dadurch kann das Hubteil auch beim Wechsel der Drehrichtung unmittelbar der Spindelbewegung folgen.

Gleichzeitig ist die Vorspannung so gewählt, daß keine übermäßige Reibung auftritt. Dies wird vor allem auch dadurch erreicht, daß jeweils Paare von Mitnehmerkugeln 10a, 10b bzw. 10a', 10b' angeordnet sind.

Ein wesentlicher Vorteil der erfindungsgemäßen Kugelrollspindel besteht darin, daß auf einfache Weise die Herstellung einer Vorrichtung, welche die Nachteile der Vorrichtung des Standes der Technik überwindet und welche allen Anforderungen genügt, welche bisher nur durch eine wesentlich komplizierter gestaltete Kugelrollspindel bzw. nur über eine Vielzahl von mit sehr kleinen Toleranzen hergestellten Teilen erfüllt werden konnte, verwirklicht werden kann. Dies gilt insbesondere für das Ausführungsbeispiel des Laufringes 12 mit einer im wesentlichen vollkommen glatten, konzentrisch zu dem Wandabschnitt 9 des Lagerkörpers 8 angeordneten Mitnehmerkugel-Lauffläche, wobei der Laufring 12 und ein einfaches Drehteil darstellt und eine axiale Verschiebung des Laufringes 12 gegenüber dem Kugelmechanismus 10, 10' dadurch erreicht wird, daß eine Arretiervorrichtung in Form jeweils einer Innenschulter 12f vorgesehen ist. Die Innenschulter 12f bildet somit einen im Querschnitt leicht U-förmigen Laufring 12, dessen innerer Schenkelabstand so ausgebildet ist, daß die Innenschulter 12f jeweils an der in axialer Richtung des Lagerkörpers 8 angeordneten äußersten und in radialer Richtung außenliegenden Mitnehmerkugel 10a bzw. 10a' anliegt, d.h. von der Innenschulter 12f jeweils geführt ist.

Die Lagerbohrungen 11, welche in dem Hülsenabschnitt des Lagerkörprs 8 in Form von radial verlaufenden Querbohrungen ausgebildet sind, sind so dimensioniert, daß keine weiteren aufwendigen Mittel zur Sicherstellung der erforderlichen Spielfreiheit benötigt werden und die Spindel 1, der Lagerkörper 8 und der Laufring 12 im wesentlichen lose, d.h. spielfrei, dennoch zentriert und wackelfrei ineinander bzw. aufeinander gesteckt sind.

Aus Symmetriegründen und aus Gründen eines besseren Kraftausgleichs weist die beschriebene Vorrichtung vorzugsweise wenigstens einen weiteren Kugelmechanismus 10" (nicht dargestellt) auf, der wie die Kugelmechanismen 10, 10' in entsprechenden Lagerbohrungen des Wandabschnitts 9 gelagert ist. Die einzelnen Kugelmechanismen 10, 10', 10" sind dabei vorzugsweise in einem radialen Abstand zueinander von ca. 120° angeordnet. Dabei greift der zusätzliche Kugelmechanismus 10" mit den entsprechenden Mitnehmerkugeln 10a" und 10b" an einer anderen Stelle in eine die Führungsnuten 5, 5' der Spindel ein, so daß sich einerseits eine ausreichend stabile Kraftübertragung ergibt, andererseits der Laufring 12 durch eine Mehrzahl von äußeren Mitnehmerkugeln 10a, 10a', 10a" konzentrisch auf dem Lagerkörper 8 gehalten und zentriert ist.

Die Montage der beschriebenen Vorrichtung kann dadurch erfolgen, daß zunächst der Laufring 12 auf den Lagerkörper 8 aufgeschoben wird und daß anschließend die Spindel unter Einfügen der entsprechenden Mitnehmerkugeln nacheinander in die jeweilige Führungsnut durch Drehen eingeführt wird.

Beim Betrieb der Vorrichtung gemäß Fig. 1 wird die Spindel 1 mit einem nicht gezeigten Drehantrieb verbunden und je nach Bedarf in Richtung des Doppelpfeiles 4 gedreht. Diese Drehbewegung wird über die Führungsnuten 5, 5', den Kugelmechanismus 10, 10' und die Lagerbohrungen 11 auf den Lagerkörper 8 bzw. das Hubteil 6 übertragen, wodurch sich der Lagerkörper 8 in Richtung des Doppelpfeiles v vor- bzw. zurückbewegt.

Wegen des vorgesehenen Arretiermechanismus ist es bei Anwendung der beschriebenen Vorrichtung nunmehr nicht möglich, daß der Laufring 12 beim Drehen der Spindel in der einen oder anderen Richtung parallel zur Längsachse 3 relativ zu dem Kugelmechanismus 10, 10' derart verschoben wird, daß der Laufring 12 von einer der Mitnehmerkugeln 10a, 10a' usw. abgleitet und den betreffenden Kugelmechanismus dann nicht mehr in Richtung der Führungsnuten 5, 5' vorspannt. Vielmehr ist ein sicherer Betrieb der Nut unabhängig von der Größe der Hubbewegung gewährleistet.

In Fig. 2 ist ein weiteres Ausführungsbeispiel der Erfindung dargestellt, bei welchem für zumindest einen Kugelmechanismus 10 ein geteilter Laufring 28a, 28b vorgesehen ist. Die beiden in Richtung der Längsachse 3 beabstandeten Teile 28a, 28b des Laufringes sind so ausgebildet, daß sie in Betriebsstellung eine im wesentlichen trapezförmige innenumlaufende Nut bilden. Dadurch ist die Mitnehmerkugel-Lauffläche 12e konzentrisch zu dem Wandabschnitt des Lagerkörpers 8 bzw. des hülsenförmigen Abschnittes des Lagerkörpers 8 ausgebildet. Jedes Teil 28a, 28b des Laufringes weist des weiteren einen Teil der Arretiervorrichtung, d.h. jeweils eine entsprechende Innenschulter 12f auf. Die beiden Teile 28a, 28b des Laufringes sind durch wenigstens ein Spannmittel, wie z.B. eine parallel zur Längsachse 3 angeordnete Spann- und Justierschraube 29 miteinander verbunden.

Analog zu der Ausbildung gemäß Fig. 1 ist in der Spindel 1 eine entsprechende Führungsnut 5 ausgebildet, in welcher die obere (radial äußere) des den Kugelmechanismus 10 bildenden Paares von Mitnehmerkugeln 10a, 10b geführt ist. Mittels der Schraube 29 kann daher nicht nur die Vorspannung der Mitnehmerkugeln 10a, 10b eingestellt werden, indem die beiden Teile 28a, 28b in axialer Richtung gegeneinandergezogen werden, es ist vielmehr auch möglich, jederzeit eine Nachjustierung des Kugelmechanismus 10 vorzunehmen, falls sich während des Betriebs ein unerwünschtes Lagerspiel ergeben sollte. Durch die Nachjustierung kann ein gegebenenfalls auftretender Verschleiß leicht ausgeglichen werden, so daß sich die Lebensdauer der erfindungsgemäßen Vorrichtung erhöhen läßt.

Ein weiterer wesentlicher Vorteil der Vorrichtung gemäß Fig. 2 besteht darin, daß die Montage auf einfache Weise erfolgen kann. Hierzu wird z.B. zuerst der Lagerkörper 8 auf die Spindel 1 aufgeschoben. Danach werden die beiden Teile 28a, 28b auf den Lagerkörper 8 aufgezogen und zu beiden Seiten der Lagerbohrung 11 angeordnet. Anschließend wird der Kugelmechanismus 10 von außen her so in die Lagerbohrung 11 eingesetzt, daß die inneren Mitnehmerkugeln 10b in der Führungsnut 5 zu liegen kommen. Abschließend werden die beiden Teile 28a, 28b mittels der Schraube 24 miteinander verbunden und mit ihren Laufflächen gegen die äußere Mitnehmerkugel 10a verspannt. Weist die Vorrichtung gemäß Fig. 2 an mehreren parallel zur Längsachse 3 beabstandeten Stellen Kugelmechanismen 10, 10' auf, so können entsprechend mehrere Laufringe 28, 28' usw. vorgesehen werden, die jeweils einem oder mehreren Kugelmechanismen zugeordnet sind.

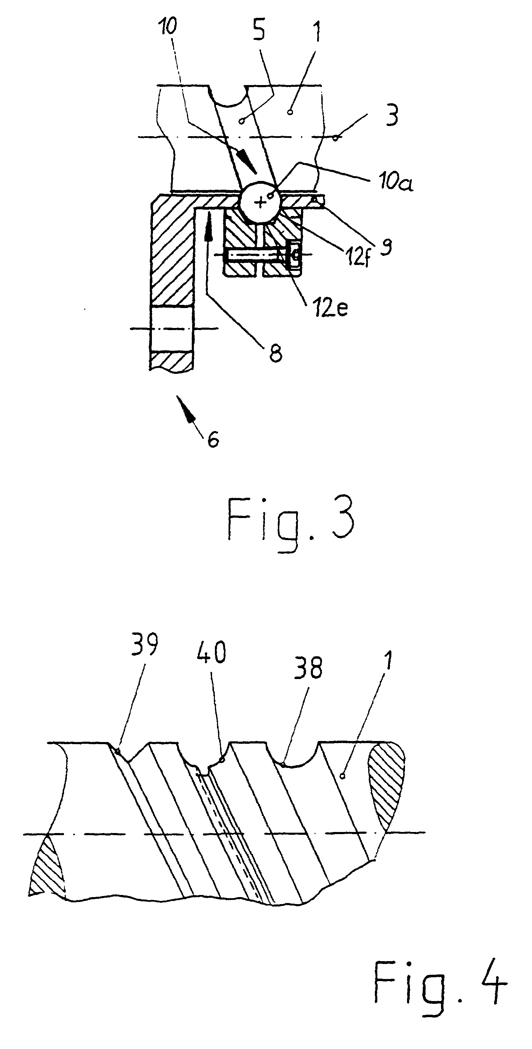

In Fig. 3 ist in Anlehnung an das in Fig. 2 dargestellte Ausführungsbeispiel ein weiteres Ausführungsbeispiel dargestellt. Dieses Ausführungsbeispiel weicht insoweit von dem in Fig. 2 dargestellten Ausführungsbeispiel ab, als anstelle einer Doppelkugelanordnung des Kugelmechanismus 10 dieser aus lediglich einer einzigen Mitnehmerkugel 10a besteht. Der Vorteil dieses Ausführungsbeispiels besteht darin, daß der Kugelmechanismus einfacher gestaltet sein kann, was insbesondere für solche Anwendungen sinnvoll ist, bei welchen der Wandabschnitt 9 des Lagerkörpers 8 bzw. Hubteils 6 relativ dünn ausgebildet sein kann. Die übrigen Teile der Vorrichtung entsprechen denen in Fig. 2.

In Fig. 4 ist in prinzipieller Darstellung eine Spindel 1 gezeigt, in welcher Führungsnuten 38, 39, 40 unterschiedlicher Konfigurationen angeordnet sind. Der Einfachheit der Darstellung halber sind die unterschiedlichen Führungsnuten 38, 39, 40 in einer einzigen Spindel 1 eingezeichnet. Die Führungsnut 38 weist einen halbkreisförmigen Querschnitt auf, wie er bei den Ausführungsbeispielen gemäß Fig. 1 und Fig. 2 bereits beschrieben wurde. Aus Gründen einer verbesserten Schmierung kann im Bodenbereich der Führungsnut 40 eine umlaufende Ringnut vorgesehen sein, welche der Aufnahme von Schmieröl dienen kann. Ein Zuführung von Schmieröl über das Innere der Spindel ist dabei in an sich bekannter Weise möglich. Die Führungsnut 39 weist einen V-förmigen Querschnitt auf. Bei Verwendung von Mitnehmerelementen in Form von Mitnehmerkugeln weist die V-förmige Führungsnut 39 den Vorteil auf, daß die Mitnehmerkugeln einen im wesentlichen punktförmigen Kontakt zu den Schenkeln des V-förmigen Querschnitts der Führungsnut haben, wodurch die Reibung zwischen der Spindel und den Mitnehmerkugeln verringert werden kann. Es versteht sich, daß die dargestellten Beispiele der Ausbildung von Führungsnuten 38, 39, 40 nur beispielhaft sind und weitere Formen vorgesehen sein können. So sind z.B. auch auf nicht kugelförmig ausgebildete Mitnehmerelemente angepaßte Führungsnuten möglich.

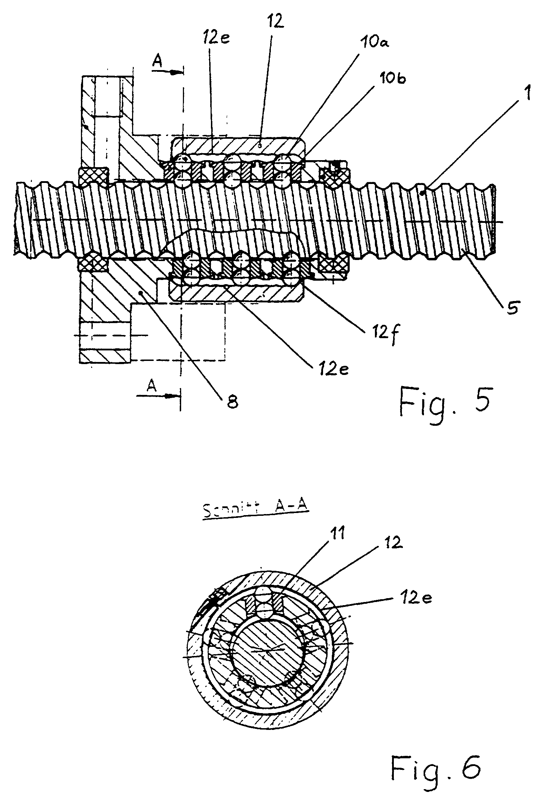

In Fig. 5 ist ein weiteres Ausführungsbeispiel der Erfindung dargestellt. Die prinzipielle Funktionsweise entspricht der in Fig. 1 beschriebenen. Bei dem beschriebenen Ausführungsbeispiel ist die im wesentlichen konzentrisch zu dem Wandabschnitt 9 angeordnete Mitnehmerkugel-Lauffläche 12e mit sehr flach ausgebildeten (nur angedeuteten) Rillen ausgebildet, in welcher jeweils eine Mitnehmerkugel 10a des Kugelmechanismus 10 eine zumindest geringe seitliche, d.h. in axialer Richtung gerichtete Führung erhält. Darüber hinaus weist der Laufring 12 an jeder Seite eine Innenschulter 12f auf, welche als Arretiervorrichtung dient und eine axiale Relativbewegung des Laufringes 12 bezüglich der Kugelmechanismen 10 verhindert. Eine derartige Ausbildung ist vor allen Dingen dann sinnvoll, wenn die Spindel 1 eine einzige Führungsnut 5 aufweist. In einem solchen Fall sind die sich gegenüberliegenden Kugelmechanismen in axialer Richtung leicht versetzt, so daß nur die äußere Mitnehmerkugel 10a von jeweils einem der in axialer Richtung am weitesten außen angeordneten Kugelmechanismen an der jeweiligen Innenschulter 12f anliegt. Durch diese Ausbildung wird ein zuverlässiges Verhindern einer axialen Relativbewegung des Laufringes 12 gegenüber dem Lagerkörper 8 gewährleistet.

Fig. 6 stellt eine Querschnittansicht durch die Linie A-A gemäß Fig. 5 dar. Daraus ist ersichtlich, daß im Bereich der Lagerbohrungen hülsenförmige Einsätze angeordnet sind, welche den Vorteil aufweisen, daß ein verschleißfesteres Material im unmittelbaren Lagerbereich verwendet werden kann, wohingegen der übrige Teil des Lagerkörpers aus herkömmlichem Material zu geringeren Kosten gefertigt sein kann. Des weiteren zeigt Fig. 6 eine Anordnung von fünf, umfänglich im wesentlichen gleich beabstandeten Kugelmechanismen. Der Laufring 12 ist als geschlitzter Laufring ausgebildet und kann mit einer Spanneinrichtung in Form einer nicht dargestellten Schraube gespannt werden. Durch das Spannen kann analog zu dem Ausführungsbeispiel gemäß Fig. 2 sowohl eine Anfangseinstellung als auch eine Nachjustierung der erfindungsgemäßen Vorrichtung vorgenommen werden.

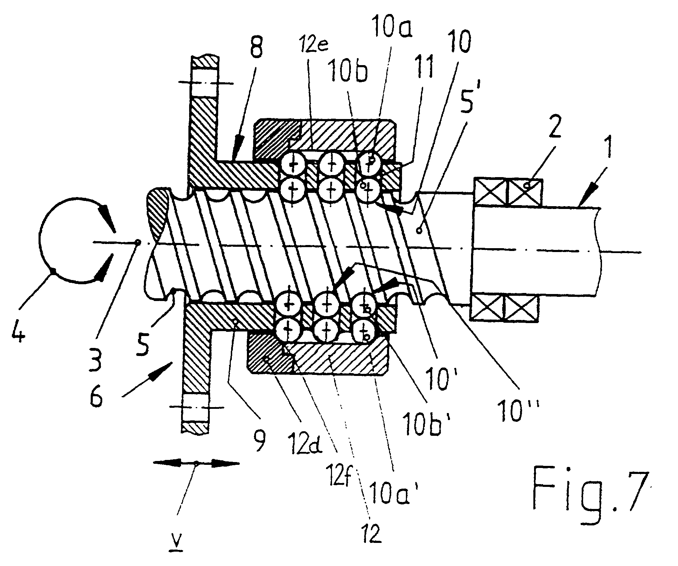

In Fig. 7 ist ein weiteres Ausführungsbeispiel dargestellt, welches in seinem prinzipiellen Aufbau dem in Fig. 1 entspricht, bei welchem jedoch der Laufring 12 zwar nicht als Spannring gemäß Fig. 2, sondern als zweigeteilter Laufring ausgebildet ist. Der Laufring 12 weist an einem stirnseitigen Ende einen Ringansatz 12d auf, welcher mit an sich bekannten Befestigungseinrichtungen lösbar mit dem Laufring 12 verbindbar ist. Dieser Ringansatz bildet im montierten Zustand einen Teil des Laufringes 12. Es ist jedoch auch möglich, beide Ringansätze als separate Ringe auszubilden, so daß der Laufring 12 in einem solchen Fall aus drei Teilen bestehen würde.

Der Vorteil einer derartigen Ausbildung besteht darin, daß eine leichtere Montage der erfindungsgemäßen Vorrichtung erfolgen kann, indem die Mitnehmerkugeln 10a, 10b; 10a', 10b' von außen durch die Lagerbohrungen 11 des Lagerkörpers 8 einführbar sind und anschließend der Laufring 12 über den Bereich des Lagerkörpers geschoben wird, in welchem die Mitnehmerkugeln angeordnet sind. Die Ringansätze 12d bzw. 12c (nicht dargestellt) sind dabei so ausgebildet, daß die Innenschulter 12f entweder formkongruent mit der Kugeloberfläche ausgebildet ist oder als einfache Schräge in Form einer Kegelmantelfläche ausgebildet ist.

Die Kugelmechanismen der erfindungsgemäßen Vorrichtung können für alle dargestellten Ausführungsbeispiele selbstverständlich auch so ausgebildet sein, daß eine, zwei oder drei oder mehrere Mitnehmerkugeln für jeden einzelnen Kugelmechanismus vorgesehen sind.

## Patentansprüche

1. Vorrichtung zur Umwandlung einer Drehbewegung in eine hin- und hergehende Bewegung, welche eine Spindel (1) mit einer zumindest eine Führungsnut (5) aufweisenden äußeren Mantelfläche, einen Lagerkörper (8) mit einem die Mantelfläche konzentrisch umgebenden Wandabschnitt (9) und eine Kraftübertragungseinrichtung mit zumindest einem zumindest eine Mitnehmerkugel (10a) umfassenden Kugelmechanismus (10) aufweist, wobei die Spindel (1) und der Lagerkörper (8) drehbar und axial relativ zueinander verschiebbar angeordnet sind, der Kugelmechanismus (10) in einer Lagerbohrung (11) in dem Wandabschnitt (9) gelagert ist und sowohl in die Führungsnut (5) als auch nach außen über den Außenumfang des Wandabschnitts (9) ragt und wobei zumindest ein den Kugelmechanismus (10) in Richtung der Führungsnut (5) vorspannender Laufring (12) auf dem Lagerkörper (8) aufgezogen ist,
der Laufring (12) zumindest eine im wesentlichen konzentrisch zu dem Wandabschnitt (9) angeordnete Mitnehmerkugel-Lauffläche (12e) und eine Arretiervorrichtung aufweist, mittels welcher der Laufring (12) bezüglich einer axialen Bewegung relativ zu dem Kugelmechanismus (10) lagefixiert ist, **dadurch gekennzeichnet, daß** die Arretiervorrichtung des Laufrings (12) zumindest im Bereich von dessen Stirnseiten (12a, 12b) jeweils einen Ringansatz (12c, 12d) aufweist, welcher einen Durchmesser aufweist, der kleiner als der Durchmesser der Mitnehmerkugel-Lauffläche (12e) ist, und welcher mit einer jeweiligen Innenschulter (12f) an einer Mitnehmerkugel (10a) anliegt.

2. Vorrichtung nach Anspruch 1, **dadurch gekennzeichnet, daß** die Innenschulter (12f) als Kugelabschnittsfläche ausgebildet ist.

3. Vorrichtung nach Anspruch 1, **dadurch gekennzeichnet, daß** die Innenschulter (12f) formkongruent zu der Oberfläche der Mitnehmerkugel (10a) ist.

4. Vorrichtung nach einem der Ansprüche 1 bis 3, **dadurch gekennzeichnet, daß** zumindest einer (12c) der beiden Ringansätze (12c, 12d) integral mit dem Laufring (12) verbunden ist.

5. Vorrichtung nach Anspruch 4, **dadurch gekennzeichnet, daß** der andere (12d) der beiden Ringansätze (12c, 12d) als Einsatzstück am Laufring (12) lösbar befestigt ist.

6. Vorrichtung nach Anspruch 5, **dadurch gekennzeichnet, daß** der Laufring (12) in seiner Längsrichtung geschlitzt als Spannring ausgebildet ist, welcher mittels eines Spannelementes spannbar ist.

## Claims

1. Device for converting a rotating motion into a reciprocating motion, featuring a spindle (1) with an external generating surface that incorporates at least one guide slot (5), a bearing box (8) having a wall portion (9) that concentrically encloses the generating surface, and a power transmitting device with at least one ball mechanism (10) that comprises at least one driving ball (10a), the spindle (1) and the bearing box (8) being adapted to rotate and being arranged so as to be displaceable axially in relation to one another, the ball mechanism (10) being seated in a bearing bore (11) in the wall portion (9) and projecting both into the guide slot (5) and outwards beyond the external circumference of the wall portion (9), and at least one bearing track ring (12) which pretensions the ball mechanism (10) in the direction of the guide slot (5) having been drawn over the bearing box (8), the bearing track ring (12) featuring at least one driving-ball bearing surface (12e) arranged substantially concentrically with the wall portion (9) and also featuring a locking device by means of which the bearing track ring (12). is immobilised against axial movement in relation to the ball mechanism (10),
**characterised in that** at least in the region of its end faces (12, 12b) the locking device for the bearing track ring (12) incorporates respective annular shoulders (12c, 12d) the diameter of which is smaller than the diameter of the driving-ball bearing surface (12e) and which rest by respective inner shoulders (12f) against a driving ball (10a).

2. Device according to claim 1, **characterised in that** the inner shoulder (12f) is in the form of a surface portion of the ball.

3. Device according to claim 1, **characterised in that** the inner shoulder (12f) is congruent in shape with the surface of the driving ball (10a).

4. Device according to any of claims 1 to 3, **characterised in that** at least one (12c) of the two annular shoulders (12c, 12d) is integrally joined to the bearing track ring (12).

5. Device according to claim 4, **characterised in that** the other (12d) of the two annular shoulders (12c, 12d) is removably fastened, in the form of an insert piece, on the bearing track ring (12).

6. Device according to claim 5, **characterised in that** the bearing track ring (12) is configured as a longitudinally slotted clamping ring which can be tightened by means of a clamping element.

## Revendications

1. Dispositif pour transformer un mouvement de rotation en un mouvement alternatif, qui comprend une vis (1) munie d'une surface latérale extérieure présentant au moins une gorge de guidage (5), un corps de palier (8) présentant un segment de paroi (9) qui entoure concentriquement la paroi latérale, et un dispositif de transmission de force qui comprend au moins un mécanisme à bille (10) comprenant lui-même au moins une bille d'entraînement (10a), la vis (1) et le corps de palier (8) étant disposés pour pouvoir tourner et se déplacer en translation axiale l'un par rapport à l'autre, le mécanisme à bille (10) étant monté rotatif dans un perçage de portée (11) pratiqué dans le segment de paroi (9) et faisant saillie aussi bien dans la gorge de guidage (5) que vers l'extérieur au-delà de la périphérie extérieure du segment de paroi (9), et au moins une bague de roulement (12) qui précontraint le mécanisme à bille (10) en direction de la gorge de guidage (5) étant emboîtée sur le corps de palier (8), la bague de roulement (12) présentant au moins une surface de roulement (12e) disposée sensiblement concentriquement au segment de paroi (9) et un dispositif d'arrêt au moyen duquel la bague de roulement (12) peut être immobilisée en position à l'encontre d'un déplacement axial relativement au mécanisme à bille (10),
**caractérisé par le fait que**
le dispositif d'arrêt de la bague de roulement (12) présente au moins dans la région de ses côtés frontaux (12a, 12b), sur chaque côté une protubérance annulaire (12c, 12d) qui présente un diamètre qui est plus petit que le diamètre de la surface de roulement (12e) de la bille d'entraînement et qui est appuyée contre une bille d'entraînement (10a) avec un épaulement intérieur correspondant (12f).

2. Dispositif selon la revendication 1, **caractérisé par le fait que** l'épaulement intérieur (12f) est constitué par une surface de segment sphérique.

3. Dispositif selon la revendication 1, **caractérisé par le fait que** l'épaulement intérieur (12f) est de forme complémentaire de la surface de la bille d'entraînement (10a).

4. Dispositif selon l'une quelconque des revendications 1 à 3, **caractérisé par le fait qu'**au moins l'une (12c) des deux protubérances annulaires (12c, 12d) est assemblée en une seule pièce à la bague de roulement (12).

5. Dispositif selon la revendication 4, **caractérisé par le fait que** l'autre (12d) des deux protubérances annulaires (12c, 12d) est fixée à la bague de roulement (12) de façon démontable, en constituant une pièce de rechange.

6. Dispositif selon la revendication 5, **caractérisé par le fait que** la bague de roulement (12), étant fendue dans sa direction longitudinale, constitue une bague de serrage qui peut être serrée au moyen d'un élément de serrage.
